# EUROPEAN PATENT APPLICATION

(11) **EP 4 420 966 A1**
(43) Date of publication of application: **28.08.2024**
(21) Application number: 24158816.9
(22) Date of filing: 21.02.2024
(51) Int. Cl.: B62J 9/26, B62J 9/23, B62J 9/27, B62J 1/08, B62J 1/12, B62J 1/28, B62J 11/24, B62K 11/10, B62J 9/30

(54) **INTEGRATED SEAT AND STORAGE ATTACHMENT FOR A SCOOTER**

(30) Priority: 22.02.2023 US 202363447602 P; 20.02.2024 US 202418582366
(71) Applicant: Neutron Holdings, Inc., San Francisco, CA 94105 (US)
(72) Inventor: LENTZ, Daniel, San Jose (US); LISLE, Jarron, San Francisco (US); OXFORD, Jon, El Cerrito (US); MITURA, Hubert, Lublin (PL); DROZD, Bartlomiej, Otrebusy (PL)
(74) Representative: Dentons UK and Middle East LLP

(57) **Abstract**

As personal mobility vehicles (PMVs) are used over longer distances, integrating storage into the PMV and improving ergonomics of the PMV are desirable to improve user comfort and provide access to safety equipment when necessary. Such integration can be achieved via systems and methods that include an integrated scooter system including a main body including a deck (102), and a seat assembly that includes a support member (104), a seat frame portion (106), and a seat cushion portion (108). The system further includes a storage component (510) that is configured to be attached to the seat frame portion. The storage component is positioned below the seat cushion portion and adjacent to the support member.

## Description

### CROSS-REFERENCE TO RELATED APPLICATIONS

This application claims priority to and the benefit of U.S. Provisional Application No. 63/447,602, filed February 22 2023, entitled "SEAT AND STORAGE ATTACHMENT FOR A SCOOTER," the disclosure of which is incorporated by reference herein in its entirety.

### TECHNICAL FIELD

This application relates to an integrated seat and storage attachment for a scooter. More specifically, this application describes an improvement in the ergonomics and storage capabilities of a scooter.

### BACKGROUND

As the use of personal motor vehicles has increased significantly throughout urban, suburban, and even rural areas, the challenge of providing a platform that is capable of and comfortable for longer journeys needs to be addressed. Personal mobility vehicles (PMVs) can be classified as a form of transportation that gives rapid mobility to users over short-to-medium distances, for example, between 0.5 miles and 3 miles. PMVs are often electrified vehicles that are intended for a single rider, such as electric scooters, electric skateboards, and electric bikes. A PMV may be of particular advantage in urban environments where they permit rapid movement between mass transportation hubs and residences, work locations, recreational areas, or commerce areas.

For purpose of exemplary illustration, PMV riders and PMV rental/sharing companies' personnel may be collectively referred to as "users". As the PMV is adopted across an increasing number of geographic areas, PMV operation on longer trips can create negative ergonomic conditions for a user. Additionally, as the PMV travels further distances, various road conditions may be factors that affect the comfort of the user. For PMV to operate in compliance to any locally defined and regulated operation rules, PMV users may need access to safety equipment such as helmets to comply with such locally defined and regulated operation rules.

### SUMMARY

Provided herein are systems and methods that integrate a seat and storage attachment for a scooter.

The systems and methods of the present disclosure may be of particular advantage in areas with high PMV usage such as streets and sidewalks, particularly to aid PMV operating companies and local governments in providing safety equipment to enable user to comply with enforcing local PMV safety rules.

Embodiments can include, for example, an integrated seat and storage attachment for a scooter. The scooter includes a main body including a deck, a stem extending from the deck to support handlebars, an accelerator, and brakes, a deck, and a seat assembly. The seat assembly includes a support member, a seat frame portion, and a seat cushion portion. The scooter may also include a storage component, wherein the storage component is configured to be attached to the seat frame portion and where the storage component is below the seat cushion portion and adjacent to the support member.

### BRIEF DESCRIPTION OF THE DRAWINGS

The present disclosure is illustrated by way of example and not limited in the figures of the accompanying drawings in which like references indicate similar elements.
FIG. 1 illustrates an example of a scooter with an integrated seat and storage system according to some embodiments of the present disclosure.
FIG. 2 illustrates a perspective view of the scooter with the integrated seat and storage system according to some embodiments of the present disclosure.
FIGS. 3A-3D depict various configurations of the scooter with integrated seat and storage system according to some embodiments of the present disclosure.
FIG. 4 illustrates an example of the scooter with the storage system in a closed position according to some embodiments of the present disclosure.
FIG. 5 illustrates an example of the scooter with the storage system in an open position according to some embodiments of the present disclosure.

### DETAILED DESCRIPTION

The present disclosure provides systems and methods for an integrated seat and storage attachment for a scooter. In some instances, it may be advantageous to provide a storage component that is integrated into a seat assembly of the scooter. As used herein, "integrated" means that the component is part of the scooter's overall design maintaining the functionality and appearance of the scooter. Integrated features of the scooter do not compromise the form or add unnecessary bulk to the scooter. In contrast, existing technologies include straps or external couplings which must be installed on the scooter before providing the storage component.

PMVs may be considered a particular class of vehicular transport for short to medium distances. In many instances, they are electrically powered, wheeled transportation devices with a range of several city blocks to a few miles.

Embodiments of the present disclosure include integrated seat and storage attachments for a scooter. The seat and storage attachments improves ergonomics of a PMV ride, especially over long distances, by providing an option for users to be seated during the ride. This also distributes the user's weight across the scooter improving balance and improving ride experience. The storage attachment also provides users with an option to place personal items, such as a bag, a backpack, a satchel and the like, thereby leaving user's hands free to aid in driving the PMV.

For operation in different locations (e.g., areas with PMV driving capabilities or areas with a mix of PMVs and vehicles in operation), users may be required to wear a safety equipment such as a helmet to comply with locally defined and regulated operation rules. However, PMV users may not have access to such safety equipment. Accordingly, the scooter according to some embodiments of this application includes a safety equipment storage equipment. To store a helmet or other safety equipment, embodiments of the present disclosure include an integrated storage component between the seat and the rear wheel as described below.

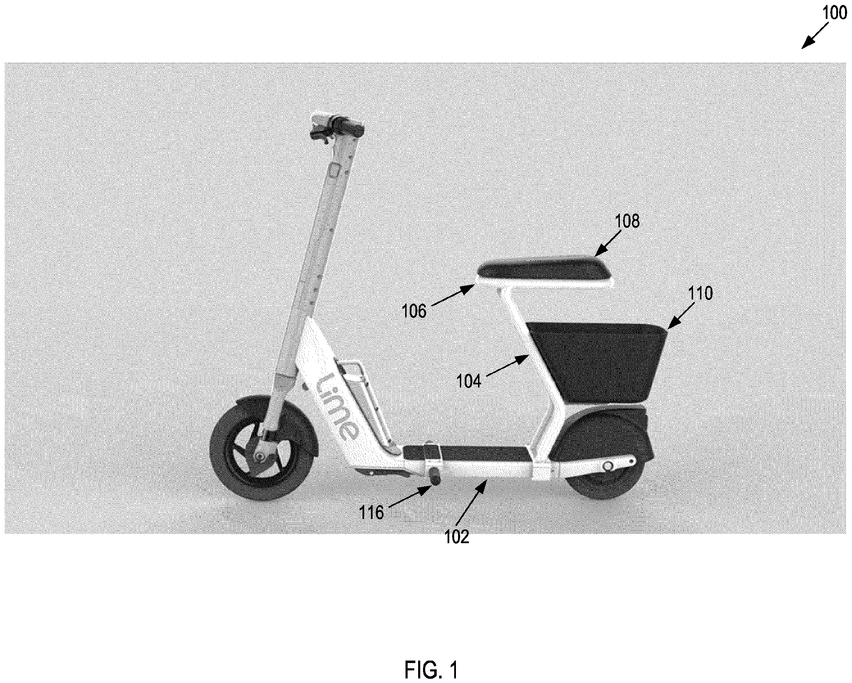

FIG. 1 illustrates an example of a scooter with an integrated seat and storage system according to some embodiments of the present disclosure. As illustrated by FIG. 1, the scooter 100 includes a deck 102, a support member 104, a seat frame 106, a seat portion 108, and a storage component 110.

The storage component 110 may be a container designed to retain contents for a user of the scooter 100. The storage component 110 may be formed of a material suitable for use with the scooter 100 such as high-density polyethylene, polycarbonate, aluminum, steel, or other suitable material. The storage component 110 may be configured to integrate with the scooter 100 in various positions. For example, FIG. 1 depicts the storage component 110 as mounted to the support member 104 below the seat frame 106 and resting on an additional frame member. In some embodiments, the storage component 110 may be mounted to the support member 104 while not contacting the seat frame 106 above or the additional frame member below. In other embodiments, as described below, the storage component 110 may be mounted in other positions on the scooter 100.

In some embodiments, the storage component 110 includes an interior retention portion that is disposed within the storage component 110. The interior retention portion may include one or more clips for retaining items placed into the storage component 110. In one example, the interior retention portion may be configured with an interior having a shape such that the shape retains a helmet for the operator of the scooter (e.g., the shape form fits the helmet shape). In some embodiments, the storage component 110 is configured to mechanically attach to the support member 104 using a guide rail or groove that cooperate to fix a position of the storage component. In contrast with existing approaches, the mounting position of the storage component 110 is disposed underneath the seat portion 108 such that the amount of space required to accommodate the storage component 110 is reduced.

Additionally, the storage component 110 may include a security device such as a locking mechanism. The locking mechanism may restrict access to the interior retention portion of the storage component 110 when engaged. The locking mechanism may include one or more processors executing a program application. The locking mechanism may be configured to disengage and provide access to the interior retention portion. For example, the locking mechanism may interact with a user device using a wireless protocol such as Bluetooth, near field communication (NFC) or a mobile/satellite communication.

The scooter 100 may have a wide, low deck 102 that improves stability and rider comfort. The deck 102 may have damping elements between the deck 102 and other elements of a frame of the scooter 100 that can prevent vibration from coming up through the deck 102. The scooter 100 can have a flexible deck 102 to further reduce vibrations. A top surface of the deck 102 is where the rider will stand on or place their feet while seated and controlling the scooter 100.

In some embodiments, a foot rest 116 may be connected to the deck 102. The foot rest 116 may be attachable via a clamp or a tension mechanism. The foot rest 116 may be positionable along any position along the deck 102. The clamp may couple the foot rest 116 to the bottom of the deck 102. The foot rest 116 may be formed of aluminum or another metal material and can include an enhanced grip surface such as a rubber sleeve.

The support member 104 may be connected to the deck 102 and the seat frame 106. In some embodiments, the support member 104 has a connection point that is configured to mount to the deck 102, such as a clamp, bracket, or other mechanical connector. The support member 104 may be formed of various materials such as metals including aluminum, alloys, steel, or another suitable material that supports the weight of a user. A plurality of support members may be included.

The seat frame 106 may be configured to support the user of the scooter when operating the scooter 100 in a seated position. The seat frame 106 may be a hollow tube of metal such as highgrade aluminum or another suitable material that supports users in a predetermined range of weights. However, the seat frame 106 may also be configured as a solid structure of a suitable material depending on the intended use or range of weights. In some embodiments, the seat frame 106, the storage component 110, and the seat portion 108 may be configured to be detached, individually or collectively, from the scooter 100. The support member 104, the seat frame 106, and/or the seat portion 108 may be attached or detached to the scooter 100 by a user. To attach the seat frame 106, the user may connect the seat frame 106 to the support member 104. The combination of the support member 104 and the seat frame 106 are mechanically coupled to the scooter 100. The mechanical coupling can include a bracket, a clamping mechanism, or other retention device suitable to connect the scooter 100 to the support member 104 and the seat frame 106. To attach the seat portion 108, the user may connect the seat portion 108 to the seat frame 106. The combination of the seat frame 106 and the seat portion 108 are mechanically coupled to the scooter 100. The mechanical coupling can include a bracket, a clamping mechanism, or other retention device suitable to connect the scooter 100 to the seat frame 106 and the seat portion 108.

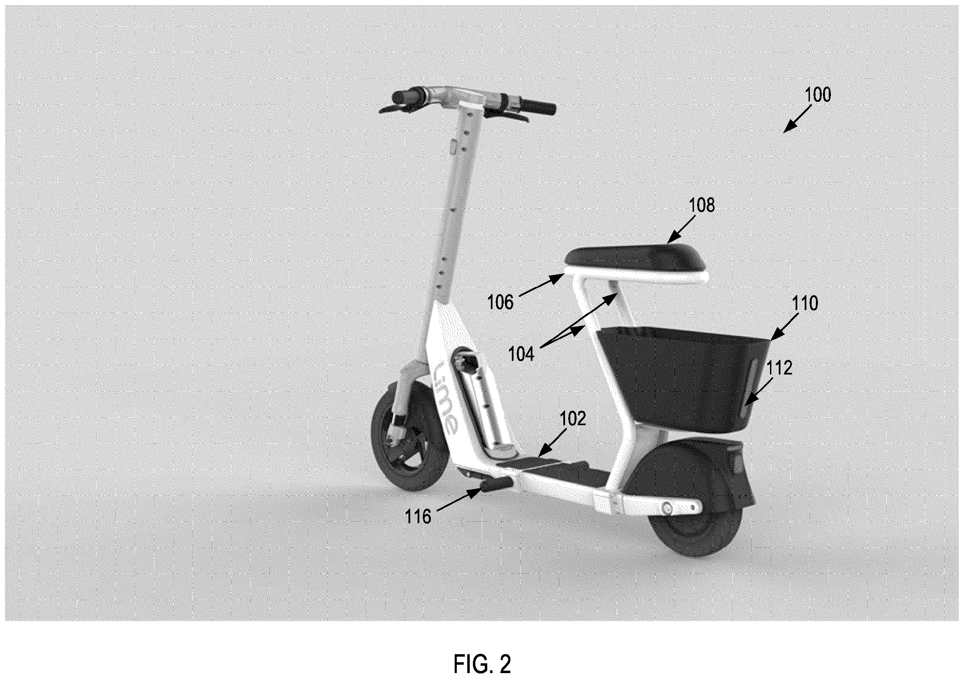

FIG. 2 illustrates a perspective view of the scooter with the integrated seat and storage system according to some embodiments of the present disclosure. As illustrated by FIG. 2, the scooter 100 includes the deck 102, the support member 104, the seat frame 106, the seat portion 108, the storage component 110, and a reflective member 112. The deck 102, the support member 104, the seat frame 106, the seat portion 108, the storage component 110 are as described above with reference to FIG. 1. The reflective member 112 may provide a visible indicator of deceleration or PMV position during conditions of reduced visibility. In some embodiments, the reflective member 112 may operate in a passive function such that it reflects lights. The portion of the reflective member 112 is not limited and the reflective member 112 can be placed at any suitable position on the scooter 100 to provide visible indication of deceleration or PMV position during conditions of reduced visibility.

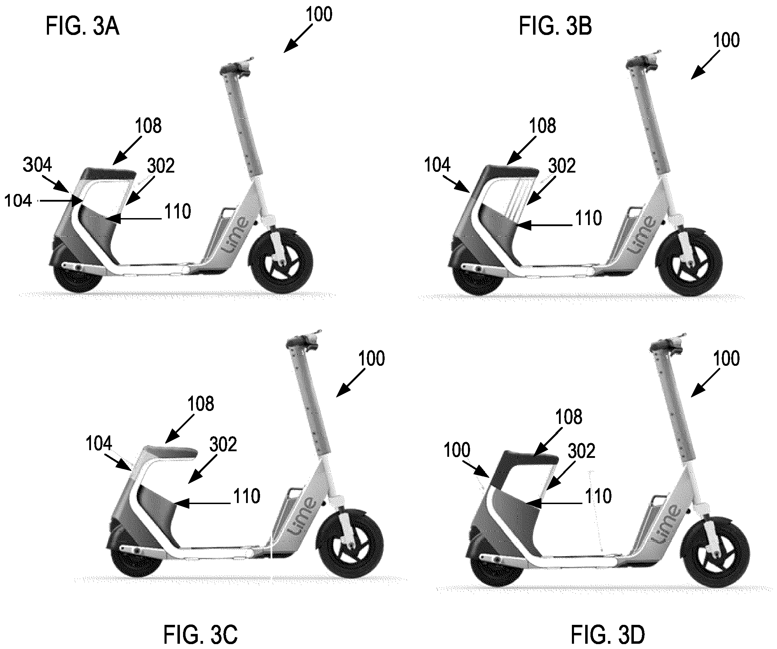

FIGS. 3A-3D depict various configurations of the scooter with integrated seat and storage system according to some embodiments of the present disclosure. As illustrated by FIGS. 3A-D, the scooter 100 may be configured with different arrangements of the support member 104, the storage component 110 and additional support member 302. In FIG. 3A, the additional support member 302 is positioned between an end portion of the storage component 110 and the seat portion 108. The additional support member 302 may be configured to retain an item in the storage component 110 while also providing structural support for the seat portion 108. In another exemplary embodiment, as illustrated in FIG. 3A, the additional support member 302 can also include a mounting region 304. The mounting region 304 may integrate the storage component 110, the additional support member 302, and the seat portion 108. In FIG. 3B, the additional support member 302 is positioned between an end portion of the storage component 110 and the seat portion 108. The additional support member 302 may be configured to retain an item in the storage component 110 while also providing structural support for the seat portion 108. As illustrated by FIG. 3B, the additional support member 302 can include multiple supports. The additional support member 302 can be an optional component and can be removed, as illustrated in FIG. 3C, to provide additional access area for the storage component. As illustrated in FIG. 3D, the additional support member 302 can connect the storage component 110 and the seat portion 108.

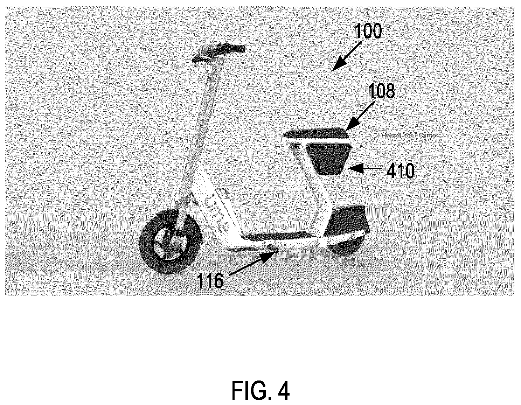

FIG. 4 is an illustration of a scooter with the storage system in a closed position according to some embodiments of the present disclosure. The scooter 100 of FIG. 4 includes elements similar to those described above. As further illustrated in FIG. 4, the storage component 410 is configured in a closed position. The closed position of the storage component 410 integrates the seat portion 108 into a cover for a top side of the storage component 410. In some embodiments, the storage component 410 is configured to transition between an open position and a closed position such as by a rail mount, a clip, or another fastening system. The storage component 410 and the seat portion 108 may cooperate to form a water-resistant container.

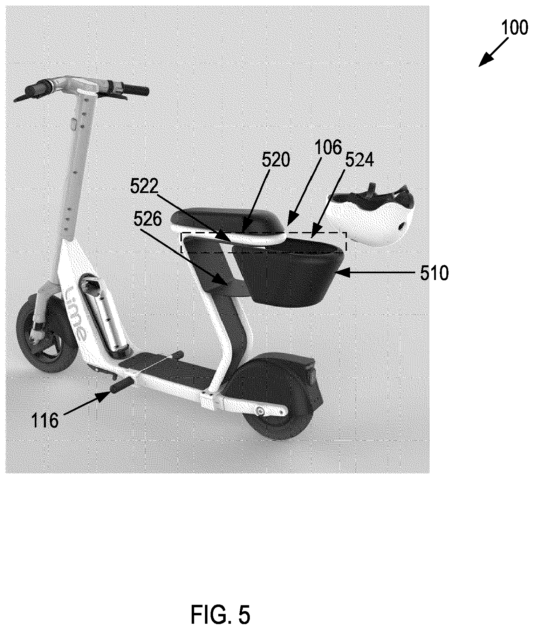

FIG. 5 illustrates an example of the scooter with the storage system in an open position according to some embodiments of the present disclosure. As illustrated by FIG. 5, the scooter 100 includes elements similar to those described above. More specifically, the storage component 510 is configured to transition to the open position from the closed position using a rail mount 520. the storage component 510 is accessible for insertion of obj ects when the storage component is in an open position. The storage component 510 and the seat frame 106 may cooperate to form the rail mount 520. The rail mount 520 includes a protruding portion 522 the extends from the seat frame 106 and a corresponding mounting portion 524 of the storage component 510. As illustrated by FIG. 5, a base member 526 provides additional support to the storage component 510.

Although the description has been described with respect to particular embodiments thereof, these particular embodiments are merely illustrative, and not restrictive. Concepts illustrated in the examples may be applied to other examples and implementations.

While preferred embodiments of the present disclosure have been shown and described herein, it will be obvious to those skilled in the art that such embodiments are provided by way of example only. It is not intended that the disclosure be limited by the specific examples provided within the specification. While the disclosure has been described with reference to the aforementioned specification, the descriptions and illustrations of the embodiments herein are not meant to be construed in a limiting sense. Furthermore, it shall be understood that all aspects of the disclosure are not limited to the specific depictions, configurations or relative proportions set forth herein which depend upon a variety of conditions and variables and can include numerous variations, changes, and substitutions that would be apparent to those skilled in the art without departing from the disclosure. It should be understood that various alternatives to the embodiments of the disclosure described herein may be employed in practicing the disclosure. It is therefore contemplated that the disclosure shall also cover any such alternatives, modifications, variations, or equivalents. It is intended that the following claims define the scope of the disclosure and that methods and structures within the scope of these claims and their equivalents be covered thereby.

## Claims

1. A scooter assembly comprising:
a main body including a deck, and a seat assembly, wherein the seat assembly includes a support member, a seat frame portion, and a seat cushion portion; and
a storage component, wherein the storage component is configured to be attached to the seat frame portion, wherein the storage component is below the seat cushion portion and adjacent to the support member.

2. The scooter assembly of claim 1, wherein the storage component is configured to retain one or more safety equipment.

3. The scooter assembly of claim 2, wherein the one or more safety equipment is a helmet.

4. The scooter assembly of claim 1, wherein the support member is attached to the deck.

5. The scooter assembly of claim 1, wherein the storage component is further configured to be detached from the seat frame portion.

6. The scooter assembly of claim 1, wherein the seat frame portion includes a protruding portion such that the storage component is configured to be attached to the protruding portion of the seat frame portion.

7. The scooter assembly of claim 6, wherein the storage component includes a mounting portion that mechanically couples to the protruding portion of the seat frame portion.

8. The scooter assembly of claim 1, wherein the main body is removable from the scooter assembly.

9. A scooter comprising:
a main body including a seat assembly that includes a support member, a seat frame portion, and a seat cushion portion; and
a storage component, wherein the storage component is configured to be attached to the support member or the seat frame portion.

10. The scooter of claim 9, wherein the storage component is configured to be removable from the main body.

11. The scooter of claim 9, wherein the storage component is configured to receive one or more safety equipment.

12. The scooter of claim 11, wherein the one or more safety equipment is a helmet.

13. The scooter of claim 11 wherein the storage component comprises a lock configured to be locked or unlocked in response to an instruction received via a mobile network.

14. The scooter of claim 11, wherein the storage component includes a retention portion configured to retain the one or more safety equipment.

15. The scooter of claim 9, wherein the seat frame portion includes a protruding portion such that the storage component is configured to be attached to the protruding portion of the seat frame portion.

16. The scooter of claim 15, wherein the storage component includes a mounting portion such that the protruding portion of the seat frame portion mechanically couples to the mounting portion.

17. The scooter of claim 16, wherein the storage component and the seat frame portion form a water-resistant container when the storage component is in a closed position.

18. The scooter of claim 16, wherein the storage component is accessible for insertion of objects when the storage component is in an open position.

19. A method comprising:
securing a main body to a scooter, wherein the main body includes a seat assembly that includes a support member, a seat frame portion, and a seat cushion portion; and
securing a storage component to the main body, wherein the storage component is configured to be attached to the support member or the seat frame portion.

20. The method of claim 19 further comprising: receiving an instruction to unlock a lock of the storage component.
